# EUROPÄISCHE PATENTSCHRIFT

(11) **EP 3 261 806 B1**
(45) Veröffentlichungstag und Bekanntmachung des Hinweises auf die Patenterteilung: **30.03.2022**
(21) Anmeldenummer: 16705895.7
(22) Anmeldetag: 16.02.2016
(51) Int. Cl.: B25J 9/00

(54) **VORRICHTUNG ZUR BEHANDLUNG VON GEGENSTÄNDEN**
DEVICE FOR HANDLING OBJECTS
DISPOSITIF POUR LE TRAITEMENT D'OBJETS

(30) Priorität: 23.02.2015 DE 102015002090
(43) Veröffentlichungstag der Anmeldung: 03.01.2018
(73) Patentinhaber: Dürr Systems AG, 74321 Bietigheim-Bissingen (DE)
(72) Erfinder: SCHREINER, Thomas, 72135 Dettenhausen (DE); SCHWAB, Stephan, 71111 Waldenbuch (DE)
(74) Vertreter: v. Bezold & Partner Patentanwälte - PartG mbB
(86) Internationale Anmeldenummer: PCT/EP2016/000260
(87) Internationale Veröffentlichungsnummer: WO 2016/134831

(56) Entgegenhaltungen:
- WO-A1-2009/146936
- WO-A2-2016/066615
- DE-A1-102011 120 230
- DE-A1-102012 019 958
- DE-T2- 69 329 490
- GB-A- 2 180 173

## Beschreibung

Die Erfindung betrifft eine Vorrichtung zur Behandlung von Gegenständen.

Auf dem Gebiet der Applikationstechnik, insbesondere der Oberflächenbehandlung und Beschichtung von Gegenständen spielt neben der Sicherung einer hohen Qualität und der Senkung der Stückkosten die Taktgeschwindigkeit eine entscheidende Rolle. Beispielsweise bei der Lackapplikation wird der zu lackierende Gegenstand, beispielsweise eine Fahrzeugkarosserie, durch eine Lackierkabine mittels Fördertechnik gefördert. Dabei kommen als Förderarten entweder ein Stop- and-Go-Verfahren oder ein kontinuierliches Fördern des zu behandelnden Gegenstandes mit Hilfe geeigneter Fördereinrichtungen zum Einsatz. Bei dem Stop-and-Go-Verfahren wird der zu lackierende Gegenstand in die Lackierkabine hinein bewegt und ruht während des Behandlungs- bzw. des Lackiervorgangs. Bei dem kontinuierlichen Fördern bewegt sich der zu lackierende Gegenstand während des Lackiervorgangs mit einer kontinuierlichen Geschwindigkeit durch die Lackierkabine.

In beiden Fällen werden heutzutage Mehrachsroboter eingesetzt, die eine Beschichtungseinrichtung tragen, um den Gegenstand zu behandeln. Da zu lackierende Fahrzeugkarosserien in der Regel Türen sowie eine Heckklappe und eine Motorhaube aufweisen, kann die Beschichtungseinrichtung den Innenraum der Karosserie nur erreichen, wenn die Türen sowie die Heckklappe und die Motorhaube geöffnet bzw. angehoben sind. Für diese Öffnungs- und Schließvorgänge werden sogenannte Handhabungsroboter eingesetzt. Ein solcher Handhabungsroboter öffnet beispielsweise eine Türe und hält sie im geöffneten Zustand, während ein Mehrachsroboter mit der Beschichtungseinrichtung den von der geöffneten Türe aus erreichbaren Innenraum der Karosserie lackiert. Nach dem Lackiervorgang kann der Handhabungsroboter die Türe wieder verschließen, sofern dies für die weitere Behandlung der Karosserie erforderlich ist. Während des Lackier- oder Beschichtungsvorgangs, insbesondere aber nach dem Verschließen der Fahrzeugkarosserieöffnungen für die Außenlackierung oder -beschichtung ist der Bewegungsraum des Mehrachsroboters durch das Vorhandensein des Handhabungsroboters unter Umständen eingeschränkt. Des Weiteren kommt hinzu, dass es während der Behandlung des zu behandelnden Gegenstands wie beispielsweise der Fahrzeugkarosserie notwendig sein kann, die eingesetzten Mehrachsroboter relativ zu dem zu behandelnden Gegenstand entlang einer horizontalen oder vertikalen zusätzlichen Achse zu bewegen, um alle zu behandelnden Oberflächen des Gegenstands zu erreichen. Auch hier kann das Vorhandensein des Handhabungsroboters hinderlich sein.

Aus diesem Grund ist üblicherweise ein zweistufiges Behandeln der Fahrzeugkarosserie in der Lackier- oder Behandlungskabine vorgesehen, um in einem ersten Schritt beispielsweise zuerst den Innenraum der Fahrzeugkarosserie zu lackieren oder zu behandeln und anschließend in einem zweiten Schritt die Fahrzeugkarosserie von außen zu lackieren oder zu behandeln. Dies bedeutet, dass in der Lackieranlage zwei Bereiche vorzusehen sind, um eine Fahrzeugkarosserie vollständig lackieren zu können. Für beide Bereiche sind jeweils mehrere Mehrachsroboter vorzusehen, die jeweils eine Beschichtungseinrichtung tragen. Dies bedeutet, dass eine Vielzahl an nahezu identischen Mehrachsrobotern, die jeweils eine Beschichtungseinrichtung tragen, in der Lackieranlage zu installieren ist. Hinzu kommt, dass für jeden Mehrachsroboter, der jeweils eine Beschichtungseinrichtung trägt, die notwendigen Anschlüsse an die Färb-, Spülmittel-, Strom- und Druckluftversorgungsleitungen vorzusehen sind.

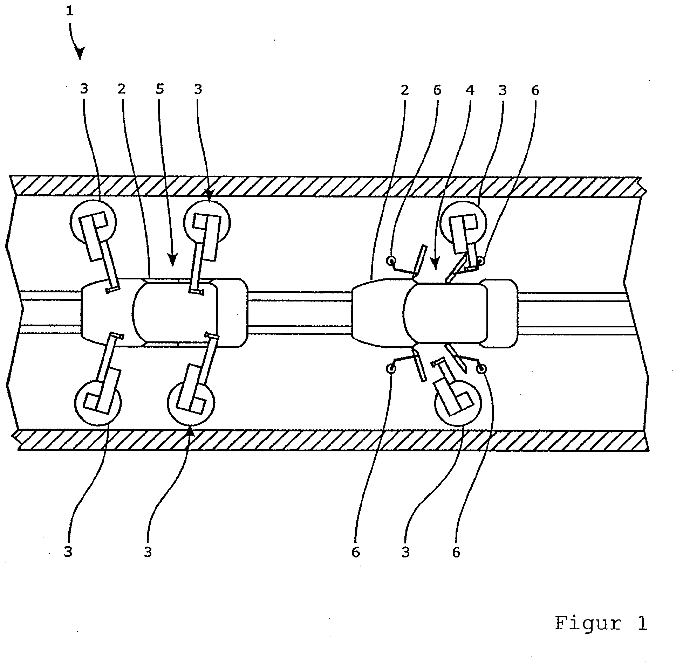

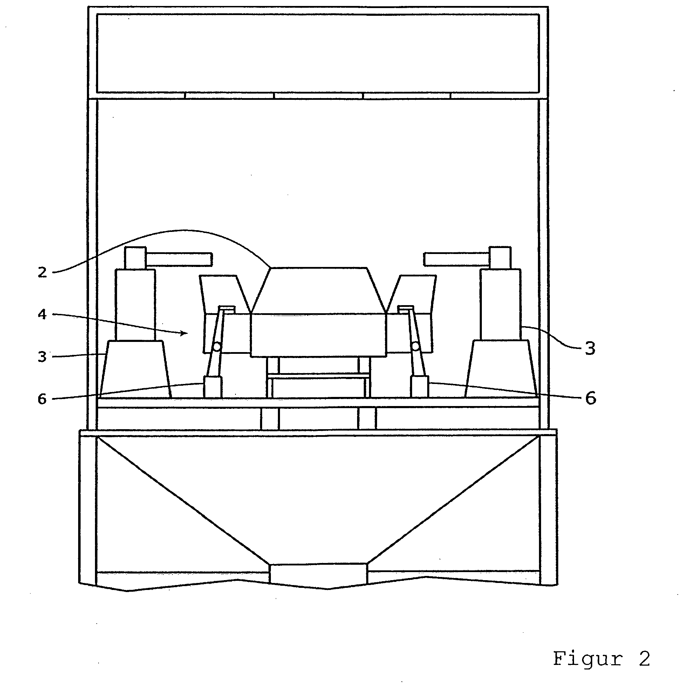

In den Figuren 1 und 2 ist diese Situation dargestellt. In den Figuren 1 und 2 ist eine Lackierkabine 1 mit Innen- und Außenlackierbereich dargestellt, die nach dem Stop-and-Go-Verfahren arbeitet. Es werden Fahrzeugkarosserien 2 durch die Fahrzeugkabine 1 gefördert. Mehrachsroboter 3, die jeweils eine Beschichtungseinrichtung tragen, sind an einer Innenraum-Lackierstation 4 und einer Außen-Lackierstation 5 vorgesehen. Die Mehrachsroboter 3 können sich relativ zu der Karosserie 2 bewegen. Dargestellt sind Mehrachsroboter ohne horizontale oder vertikale zusätzliche Bewegungsachse. An der Innen-Lackierstation 4 sind zusätzlich Handhabungsroboter 6 stationär vorgesehen. In der Regel sind solche Handhabungsroboter 6 in unmittelbarer Nähe des zu öffnenden/schließenden Elements, also hier einer Tür der Fahrzeugkarosserie 2, vorgesehen, und schränken somit durch das von dem Handhabungsroboter 6 eingenommene Raumvolumen die Bewegungsfreiheit der Mehrachsroboter 3 ein. Aufgrund der Notwendigkeit, zwei Lackierbereiche 4, 5 für den Innen- und den Außenbereich der Fahrzeugkarosserie 2 vorzusehen, besitzt diese Lackierkabine die oben beschriebenen Nachteile.

Es ist bekannt, für die Handhabungsroboter 6 eine zu den Mehrachsrobotern 3 vergleichbare relative Beweglichkeit zu der Fahrzeugkarosserie 2 vorzusehen. In der WO 2009/146 936 ist eine solche Lackierkabine beschrieben, bei der Innen- und Teile der Außenlackierung gleichzeitig durchgeführt werden und die Außenlackierung nach einem Verschließen der Karosserieöffnungen abgeschlossen wird. Diese Lösung ist allerdings aufwändig und damit teuer. Es ist eine Aufgabe der Erfindung, die genannten Nachteile zu lindern und insbesondere eine Vorrichtung anzugeben, die den Bewegungsraum eines Mehrachsroboters, der eine Beschichtungseinrichtung trägt, so wenig wie möglich einschränkt. Insbesondere ist es zusätzlich eine Aufgabe der Erfindung, die Innen- und die Außenlackierung eines Gegenstandes, insbesondere einer Fahrzeugkarosserie, mit denselben eine Beschichtungseinrichtung tragenden Mehrachsrobotern zu ermöglichen.

Zum technischen Hintergrund der Erfindung ist auch hinzuweisen auf DE 10 2012 019958 A1, GB 2 180 173 A, WO 2009/146936 A1, DE 10 2011 120230 A1 und WO 2016/066615 A2.

Schließlich offenbart DE 693 29 490 T2 eine Vorrichtung gemäß dem Oberbegriff von Anspruch 1. Diese bekannte Vorrichtung ist jedoch noch nicht vollständig befriedigend.

Diese Aufgabe wird durch eine Vorrichtung gemäß dem unabhängigen Anspruch 1 gelöst.

Weitere Ausgestaltungen der Erfindung sind in den Unteransprüchen angegeben.

Die Positioniereinrichtung für einen Handhabungsroboter ist dazu eingerichtet, in einem ersten Zustand der Positioniereinrichtung einen Handhabungsroboter in einer Ruheposition und in einem zweiten Zustand in einer Aktivposition zu halten. In der Ruheposition ist der Handhabungsroboter unterhalb, insbesondere innerhalb einer vertikalen Projektion, eines zu behandelnden Gegenstands angeordnet. Für den Handhabungsroboter sind also zwei Positionen vorgesehen, in die er mittels der Positioniereinrichtung verbracht werden kann. In der Aktivposition ist vorgesehen, dass er seiner eigentlichen Zweckbestimmung, nämlich dem Behandeln eines Gegenstands, nachkommen kann. In der Ruheposition hingegen ist vorgesehen, dass er sich unterhalb des zu behandelnden Gegenstands befindet. Aufgrund der Tatsache, dass die Positioniereinrichtung den Handhabungsroboter im Wesentlichen lediglich in zwei Positionen bringen muss, muss die Positioniereinrichtung geringeren Anforderungen genügen, als wenn entlang ihres Verfahrwegs eine genaue Positionierung erfolgen müsste. Die möglicherweise notwendige genaue Positionierung des Handhabungsroboters, z.B. an einer Fensteröffnung einer Fahrzeugtüre, geschieht durch den Handhabungsroboter selbst. Des Weiteren ist die Aufbewahrung des Handhabungsroboters unterhalb des zu behandelnden Gegenstands besonders vorteilhaft, da so der gesamte Raum seitlich des zu behandelnden Gegenstandes und/oder oberhalb frei bleibt. Ist der Handhabungsroboter in seiner Ruhestellung insbesondere innerhalb einer vertikalen Projektion des zu behandelnden Gegenstands angeordnet, ist zudem der gesamte Raum seitlich des zu behandelnden Gegenstands beispielsweise für eine Behandlung durch Mehrachsroboter, die jeweils eine Beschichtungseinrichtung tragen, frei.

Eine bevorzugte Ausgangsform ergibt sich dadurch, dass der Handhabungsroboter in der Aktivposition zumindest teilweise oberhalb der tiefsten Stelle des zu behandelnden Gegenstands ist. Während der Handhabungsroboter also in der Ruhestellung einen freien Zugang zu dem zu behandelnden Gegenstand bietet, ist er in der Aktivposition so relativ zu dem zu behandelnden Gegenstand angeordnet, dass er beispielsweise eine Aktion an dem zu behandelnden Gegenstand wie etwa ein Türöffnen durchführen kann.

Vorzugsweise weist die Positioniereinrichtung eine mechanische Verbindungsmöglichkeit für den Handhabungsroboter auf. Die Positioniereinrichtung kann also je nach Bedarf mit einem geeigneten Handhabungsroboter ausgestattet werden. Bei dem Handhabungsroboter kann es sich vorzugsweise auch um einen Roboter mit mehreren Achsen handeln, der an seinem freien Ende mit verschiedenen Hilfsmitteln zum Öffnen und/oder Schließen von Türen an einem Fahrzeug bestückt werden kann.

Besonders bevorzugt ist es, wenn sich die Position der mechanischen Verbindungsmöglichkeit in der Ruheposition von der Position der mechanischen Verbindungsmöglichkeit in der Aktivposition unterscheidet. Bei einem Übergang von der Ruheposition in die Aktivposition erfolgt also eine Verlagerung der mechanischen Verbindungsmöglichkeit. Auf diese Weise kann der in der Aktivposition von dem Handhabungsroboter belegte Bewegungsraum durch eine Verlagerung des Handhabungsroboters in die Ruheposition zumindest teilweise, bevorzugt völlig freigegeben werden.

Es ist von Vorteil, wenn die Positioniereinrichtung so eingerichtet ist, dass ein Übergang von der Ruheposition in die Aktivposition mittels einer Rotationsbewegung oder/und einer Translationsbewegung erfolgt. Je nach Ausgestaltung des Handhabungsroboters oder der Positioniereinrichtung kann die eine oder die andere Bewegungsart oder auch eine Kombination aus Rotation und Translation von Vorteil sein.

Vorteilhafterweise ist der Handhabungsroboter in der Ruheposition durch die Positioniereinrichtung geschützt. Der Schutz kann sich dabei insbesondere auf in der Umgebung der Positioniereinrichtung befindliche Gase, Flüssigkeiten oder Feststoffe, insbesondere Overspray bei einem Lackiervorgang, beziehen.

Die Positioniereinrichtung ist hierbei Bestandteil einer Vorrichtung zur Behandlung von Gegenständen mit einer Fördereinrichtung zum Bewegen des zu behandelnden Gegenstands und der Positioniereinrichtung wie obenstehend beschrieben. Eine derartige Positioniereinrichtung kann vorteilhafterweise in den Raum der Fördereinrichtung integriert werden, ohne diese zu behindern. Bei einer solchen Vorrichtung zur Behandlung von Gegenständen kann es sich beispielsweise um eine Lackierkabine handeln.

Ist eine solche Vorrichtung zur Behandlung von Gegenständen, insbesondere eine Lackierkabine, mit einer Positioniereinrichtung ausgestattet, die eine Verlagerung der mechanischen Verbindungsmöglichkeit des Handhabungsroboters bei einem Übergang von der Ruheposition in die Aktivposition vorsieht, ist es von Vorteil, wenn eine Verbindungsgerade zwischen der mechanischen Verbindungsmöglichkeit in der Ruheposition und der mechanischen Verbindungsmöglichkeit in der Aktivposition einen Winkel zu der Bewegungsrichtung des zu behandelnden Gegenstands in einem Bereich von 30° bis 150°, bevorzugt 45° bis 135°, besonders bevorzugt 60° bis 120° und insbesondere 90° aufweist. Erfolgt eine Verlagerung des Handhabungsroboters senkrecht zu der durch die Fördereinrichtung festgelegten Bewegungsrichtung des zu behandelnden Gegenstands oder im Wesentlichen senkrecht dazu, muss der Handhabungsroboter nur einen kurzen Weg zurücklegen, um von der Ruheposition in die Aktivposition zu gelangen.

Es ist von Vorteil, wenn die Positioniereinrichtung an und/oder innerhalb des Raumes der Fördereinrichtung angeordnet ist. Dabei kann die Positioniereinrichtung beispielsweise an einer festen Stelle im Bereich der Fördereinrichtung so positioniert sein, dass der Handhabungsroboter in der Ruheposition vollständig unterhalb des zu behandelnden Gegenstands angeordnet ist. Bei einer Ausführungsform kann vorgesehen sein, dass die Positioniereinrichtung dazu eingerichtet ist, mittels der Fördereinrichtung selbst oder unterhalb der Fördereinrichtung mittels einer eigenen zusätzlichen horizontalen Achse mit dem zu behandelnden Gegenstand mitgefördert zu werden.

Eine solche Anordnung kann insbesondere von Vorteil sein, wenn die Fördereinrichtung ein kontinuierliches Bewegen vorsieht, bei dem der zu behandelnde Gegenstand während der Behandlung kontinuierlich gefördert, d.h. bewegt, wird. Bei einem sogenannten Stop-and-Go-Verfahren hingegen kann es von Vorteil sein, wenn die Positioniereinrichtung ortsfest im Bereich der oder unterhalb der Fördereinrichtung angebracht ist und nicht mit dem zu behandelnden Gegenstand mitgefördert wird.

Erfindungsgemäß ist vorgesehen, dass die Vorrichtung mindestens einen weiteren Mehrachsroboter aufweist, der eine Beschichtungseinrichtung trägt. Eine solche Vorrichtung kann also mindestens einen ersten Handhabungsroboter, der mittels der Positioniereinrichtung zwischen einer Aktivposition und einer Ruheposition bewegbar ist und mindestens einen zweiten Mehrachsroboter aufweisen. Befindet sich der mindestens erste Handhabungsroboter in seiner Ruheposition, steht dem mindestens zweiten Mehrachsroboter ein größerer Bewegungsraum zur Verfügung, als wenn der mindestens erste Handhabungsroboter sich in seiner Aktivposition befindet. Diese Ausgestaltung ermöglicht es, dass die Vorrichtung zur Behandlung von Gegenständen, insbesondere eine Lackierkabine, einen einzigen kombinierten Innen-/Außenlackierbereich aufweist. Bei einer Ausführungsform der Vorrichtung wird, während der mindestens eine Handhabungsroboter durch die mindestens eine Positioniereinrichtung in einer Aktivposition gehalten wird, durch den mindestens einen Mehrachsroboter, der eine Beschichtungseinrichtung trägt, der Gegenstand, vorzugweise die Fahrzeugkarosserie, bei geöffneten Türen, Heck- und/oder Frontklappe von innen lackiert.

Zusätzlich kann vorgesehen sein, dass bei einer Ausführungsform der Vorrichtung, während der mindestens eine Handhabungsroboter durch die mindestens eine Positioniereinrichtung in einer Ruheposition gehalten wird, durch den mindestens einen Mehrachsroboter, der eine Beschichtungseinrichtung trägt, der Gegenstand, vorzugweise das Fahrzeug, bei geschlossenen Türen, Heck- oder/und Frontklappe von außen lackiert wird.

Bei einer Ausführungsform der Vorrichtung wird in Abhängigkeit des Zustands der Positioniereinrichtung des mindestens einen Handhabungsroboters, der mindestens eine Mehrachsroboter von der Steuerung der Vorrichtung zur Behandlung von Gegenständen, insbesondere einer Lackierkabine, so eingestellt, dass seine Parameter eine dem Zustand der Positioniereinrichtung angemessene Sprühstrahlform ermöglichen.

Aufgrund der unterschiedlichen Anforderungen an den Handhabungsroboter und den Mehrachsroboter können diese verschieden aufgebaut sein.

Die Erfindung wird nun unter Bezugnahme auf die Figuren näher erläutert. Es zeigen: Figur 1 eine Draufsicht auf eine Lackierkabine gemäß dem der Technik;
Figur 2 eine Schnittansicht der Lackierkabine der Figur 1;
Figur 3 eine Draufsicht auf eine erste erfindungsgemäße Ausführungsform einer Positioniereinrichtung, ohne Mehrachsroboter, die eine Beschichtungseinrichtung tragen;
Figur 4 eine Draufsicht auf eine zweite erfindungsgemäße Ausführungsform einer Positioniereinrichtung, ohne Mehrachsroboter, die eine Beschichtungseinrichtung tragen;
Figur 5 eine Draufsicht auf eine dritte erfindungsgemäße Ausführungsform einer Positioniereinrichtung, ohne Mehrachsroboter, die eine Beschichtungseinrichtung tragen;
Figur 6 eine Draufsicht auf eine vierte erfindungsgemäße Ausführungsform einer Positioniereinrichtung, ohne Mehrachsroboter, die eine Beschichtungseinrichtung tragen;
Figur 7 eine Draufsicht auf eine erfindungsgemäße Lackierkabine mit sich in Aktivposition befindlichen Positioniereinrichtungen gemäß Figur 3;
Figur 8 eine Schnittansicht der Lackierkabine der Figur 7; Figur 9 eine Draufsicht der Figur 7 mit der Positioniereinrichtung in Ruheposition; und
Figur 10 eine Schnittansicht der Lackierkabine der Figur 9.

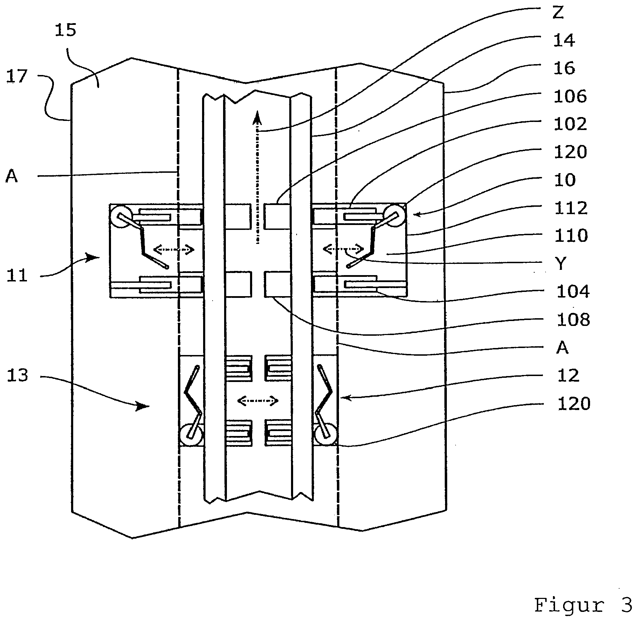

In Figur 3 sind in einer Draufsicht vier Positioniereinrichtungen 10, 11, 12, 13 gemäß einer ersten Ausführungsform gezeigt. Die Positioniereinrichtungen 10-13 sind in den Raum einer Fördereinrichtung 14 integriert. Die Fördereinrichtung 14 ist dazu eingerichtet, zu behandelnde Gegenstände wie etwa Fahrzeugkarosserien entlang einer Förderachse Z durch einen Behandlungsraum wie etwa eine Lackierkabine 15 zu bewegen. Die Lackierkabine 15 ist lediglich schematisch und in einem Ausschnitt gezeigt und weist entlang der Förderachse Z Wände 16, 17 auf. Auf die zusätzliche Darstellung von Mehrachsrobotern für Beschichtungsaufgaben wurde der Übersichtlichkeit halber verzichtet.

Die Lackierkabine wird auch in Förderrichtung Z von hier nicht gezeigten Wänden mit Schleusen für die zu behandelnden Gegenstände begrenzt. Figur 3 zeigt eine Lackierkabine, in der sowohl die zuerst stattfindende Innenlackierung als auch die im Anschluss folgende Außenlackierung des Gegenstandes, insbesondere der Fahrzeugkarosserie, möglich ist. Somit tragen die nicht gezeigten Mehrachsroboter eine Beschichtungseinrichtung, die dazu geeignet ist, sowohl für die Innenlackierung, als auch für die Außenlackierung verwendet zu werden.

Die Anpassung des Sprühstrahls der Beschichtungseinrichtung, sowie weitere Parameter wie Lackmenge, Lenkluft oder Hochspannung werden von einer zentralen Steuereinheit (nicht gezeigt) der Lackierkabine vorgegeben. Diese gibt auch die Parameter für die Positioniereinrichtung vor. Der Zustand der Positioniereinrichtung und die Position des Handhabungsroboters müssen zu den Parametern für die entsprechende Lackierung passen.

Es sind vorzugsweise zwei Positioniereinrichtungen 10, 12 auf einer Seite der Fördereinrichtung 14 und zwei Positioniereinrichtungen 11, 13 auf der anderen Seite der Fördereinrichtung 14 angeordnet. Die Positioniereinrichtungen 10-13 sind nach dem Grundprinzip einer Schublade ausgestaltet und öffnen bzw. schließen sich entlang einer Bewegungsachse Y. Die Bewegungsachse Y ist im Wesentlichen senkrecht zur Förderachse Z. Es sind selbstverständlich andere Winkel außer einem 90°-Winkel zwischen Bewegungsachse Y und der Förderachse Z möglich, solange die Bewegung entlang der Bewegungsachse Y eine Entfernung von der Förderachse Z ermöglicht. Die entlang der Förderachse Z weiter vorne angeordneten Positioniereinrichtungen 10, 11 sind in einer Aktivposition gezeigt, die die entlang der Förderachse Z weiter hinten angeordneten Positioniereinrichtungen 12, 13 sind in einer Ruheposition gezeigt. Während eines Lackiervorgangs sind in der Regel alle Positioniereinrichtungen 10-13 einer Lackierkabine im gleichen Zustand, also entweder in der Ruheposition oder in der Aktivposition. Der in der Fig. 3 gezeigte Zustand kann beispielsweise bei einem Wechsel von Innen- zu Außenlackierung vorkommen .

Die einzelnen Positioniereinrichtungen 10-13 sind im Wesentlichen baugleich. Es wird deshalb im Folgenden nur die Positioniereinrichtung 10 im Detail beschrieben, die Beschreibung gilt jedoch analog auch für die anderen Positioniereinrichtungen 1113. Die Positioniereinrichtung 10 weist zwei Verlagerungseinrichtungen 102, 104 auf. Die Verlagerungseinrichtungen 102, 104 können motorisch, beispielsweise elektromotorisch, oder pneumatisch bzw. hydraulisch angetrieben sein. Die Verlagerungseinrichtungen 102, 104 stützen sich unterhalb der Fördereinrichtung 14 an Montagestellen 106, 108 ab. Die Verlagerungseinrichtungen 102, 104 sind mechanisch mit einer Plattform 110 gekoppelt. Die Plattform 110 kann flächig, als Rahmenkonstruktion oder anderweitig geeignet ausgeführt sein. Bei einer Betätigung der Verlagerungseinrichtungen 102, 104 wird die Plattform 110 entlang der Bewegungsachse Y von unterhalb der Fördereinrichtung 14 heraus bewegt. In dieser als Aktivposition bezeichneten ersten Endposition ist die Positioniereinrichtung 10 gezeigt. In einer als Ruheposition bezeichneten zweiten Endposition ist beispielsweise die Positioniereinrichtung 12 gezeigt.

Die Plattform 110 trägt einen Handhabungsroboter 120. Zu diesem Zweck ist eine nicht näher dargelegte mechanische Verbindungsmöglichkeit an der Plattform 110 vorgesehen. In der vorliegenden Ausführungsform ist der Handhabungsroboter 120 als Türöffnungsroboter ausgeführt. Es kann sich bei dem Handhabungsroboter 120 auch um einen Hauben- oder Heckklappenöffnungsroboter handeln.

Der Handhabungsroboter 120 nimmt während des Positioniervorgangs in die Aktivposition oder am Ende des Positioniervorgangs seinerseits eine Aktivstellung ein, in der er die ihm zugedachte Funktion ausüben kann. Um durch die Positioniereinrichtung in die Ruheposition bewegt zu werden, nimmt der Handhabungsroboter 120 während oder vor dem Positioniervorgang seinerseits eine Ruhestellung ein. Bei der Positioniereinrichtung 10 ist der Handhabungsroboter 120 in seiner Aktivstellung gezeigt, während bei der Positioniereinrichtung 12 sich der Handhabungsroboter 120 in der Ruhestellung befindet. Ist die Positioniereinrichtung 10, wie beispielsweise bei der Positioniereinrichtung 12 gezeigt, in ihrer Ruheposition, schützt eine an der Plattform 110 angebrachte Abdeckung 112 den dahinterliegenden Handhabungsroboter 120 vor während des Lackiervorgangs entstehendem Overspray.

Wie ebenfalls anhand der sich in der Ruheposition befindlichen Positioniereinrichtungen 12, 13 ersichtlich ist, befindet sich die jeweilige Positioniereinrichtung 12, 13 vollständig unterhalb und/oder vollständig innerhalb eines durch den zu behandelnden Gegenstand überstrichenen Bereichs A, der in den Figuren durch eine gestrichelte Linie gekennzeichnet ist.

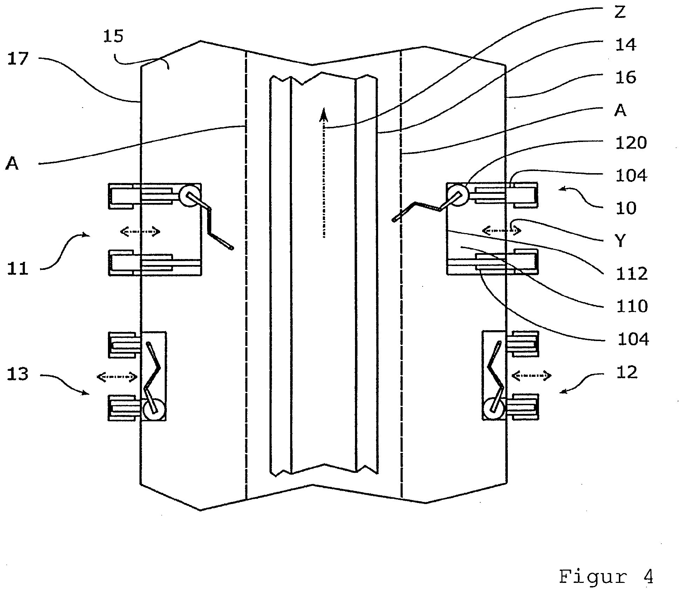

Figur 4 zeigt in einer Draufsicht eine zweite Ausführungsform einer Positioniereinrichtung. Für gleiche oder vergleichbare 20 Merkmale werden im Folgenden die gleichen Bezugszeichen verwendet. Im Unterschied zu den Positioniereinrichtungen 10-13 der Figur 3 sind in Figur 4 die Positioniereinrichtungen 10-13 nicht unterhalb der Fördereinrichtung 14 und innerhalb des von dem zu behandelnden Gegenstand überstrichenen Bereichs A angeordnet, sondern befinden sich in ihrer Ruheposition, wie sie bei den Positioniereinrichtungen 12, 13 gezeigt ist, zumindest teilweise in den Wänden 16, 17. Auch hier wäre ein vollständiges Verschwinden der Positioniereinrichtungen 13 in den Wänden 16, 17 möglich. Da sich aber der Bewegungsbereich eines sich in der Lackierkabine 15 bewegenden Mehrachsroboters, der eine Beschichtungseinrichtung trägt, nahe dem zu behandelnden Gegenstand befindet, ist ein vollständiges Verschwinden der Positioniereinrichtungen 10-13 nicht zwingend notwendig. Falls sich der nicht gezeigte Mehrachsroboter, der die Beschichtungseinrichtung trägt, jedoch auf einer zusätzlichen horizontalen Achse parallel zu dem zu behandelnden Gegenstand bewegt werden kann, so sollte die in Fig. 4 beschriebene Positioniereinrichtung unterhalb dieser zusätzlichen horizontalen Achse untergebracht sein.

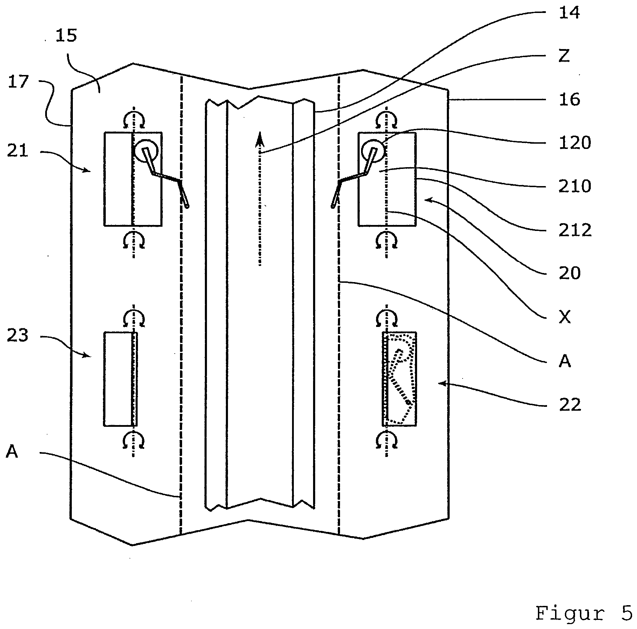

Figur 5 zeigt in einer Draufsicht eine dritte Ausführungsform einer Positioniereinrichtung. In der Lackierkabine 15 sind wiederum vier Positioniereinrichtungen 20, 21, 22, 23 angeordnet. Im Unterschied zu der ersten Ausführungsform der Figur 3 sind die Positioniereinrichtungen 20-23 in der Ruheposition im Boden der Lackierkabine 15 untergebracht. Die in der Figur 5 unten angeordneten Positioniereinrichtungen 22, 23 sind in dieser Ruheposition gezeigt, die in der Figur 5 oben angeordneten Positioniereinrichtungen 20, 21 sind in der Aktivposition gezeigt.

Die Positioniereinrichtungen 20-23 sind um eine Achse X verschwenkbar. Die Achse X ist parallel zur Förderachse Z angeordnet. Dies ist aber keine notwendige Voraussetzung. Jede andere Anordnung unter einem beliebigen Winkel zur Förderachse Z ist möglich. Die Positioniereinrichtungen 20-23 sind im Wesentlichen baugleich. Es wird im Folgenden aus diesem Grund lediglich die Positioniereinrichtung an sich anhand der Darstellungen der Positioniereinrichtungen 20, 22 erläutert. Jede der Positioniereinrichtungen 20-23 weist einen Handhabungsroboter 120 auf, der in der Aktivposition (dargestellt anhand der Positioniereinrichtungen 20, 21) in eine Aktivstellung verfahrbar ist und in der Ruheposition (dargestellt anhand der Positioniereinrichtungen 20, 23) in eine Ruhe- oder Parkstellung verfahrbar ist. In der Ruhestellung im Boden ist die Positioniereinrichtung 20, 21 vollständig aus der Lackierkabine 15 entfernt und mit einer Abdeckung gegen die in der Lackierkabine befindlichen Stoffe wie beispielsweise Overspray geschützt. Die Abdeckung 212 kann gleichzeitig überfahren werden bzw. die Positioniereinrichtungen 20-23 bilden keine Störkontur in der Lackierkabine, sodass ein sich in der Lackierkabine 15 bewegender Mehrachsroboter, der eine Beschichtungseinrichtung trägt, keinen Einschränkungen hinsichtlich seines Bewegungsbereichs unterliegt.

In der Darstellung der Positioniereinrichtung 22 ist die Abdeckung 212 zeichnerisch teilweise entfernt, sodass erkennbar ist, dass der Handhabungsroboter 120 in der Ruheposition eine Ruhestellung einnimmt. Der Handhabungsroboter 120 ist auf einer Plattform 210 angeordnet. In einem Querschnitt senkrecht zum Boden der Lackierkabine 15 kann die Plattform 210 eine L-Form aufweisen, sie kann aber auch als einfache Platte ausgebildet sein.

Alternativ kann der Handhabungsroboter 120 unterhalb oder hinter einer beweglichen Klappe im Boden oder der Wand der Lackierkabine angeordnet sein. Die Klappe, die in der Aktivposition des Handhabungsroboters weggeklappt oder weggeschoben wird und dem Handhabungsroboter seine volle Bewegungsfreiheit gibt und die in der Ruheposition den Handhabungsroboter 120 verdeckt, ist die einfachste Ausführungsform der Positioniereinrichtung. Dieses Beispiel ist in den Figuren nicht gezeigt.

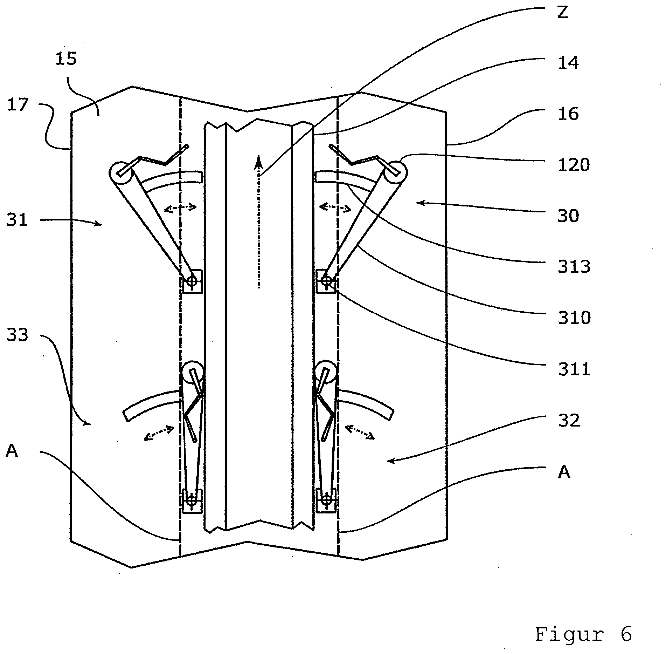

Figur 6 zeigt in einer Draufsicht eine vierte Ausführungsform einer Positioniereinrichtung. Die in Figur 6 gezeigten Positioniereinrichtungen 30-33 sind bis auf eine spiegelbildliche Anordnung im Wesentlichen baugleich. Die Positioniereinrichtungen 30-33 weisen eine verschwenkbare Plattform 310 auf. Die Plattform 310 ist an einem Ende unterhalb des von dem zu behandelnden Gegenstand überstrichenen Bereichs A an einem beispielsweise am Boden der Lackierkabine 15 befestigten Gelenk 311 angelenkt. Das dem Gelenk 311 gegenüberliegende Ende der Plattform 310 trägt einen Handhabungsroboter 120. Eine Führung 313, die gegebenenfalls mit Lagern ausgestattet sein kann, führt die Schwenkbewegung der Plattform 310. Die zur Bewegung der Positioniereinrichtung 30 benötigte Krafteinleitung kann entweder im Bereich des Gelenks 311 oder beispielsweise im Bereich der Führung 313 erfolgen. In der in den Positioniereinrichtungen 32, 33 gezeigten Ruheposition befindet sich die Plattform 110 samt Handhabungsroboter 120 innerhalb des von dem zu behandelnden Gegenstand überstrichenen Bereichs A. Lediglich die Führung 313 ragt aus dem Bereich A heraus. Die Führung kann aber beispielsweise so ausgestaltet sein, dass sie das gleiche Niveau wie der umgebende Boden der Lackierkabine aufweist und somit beispielsweise schwellenlos überfahren werden kann.

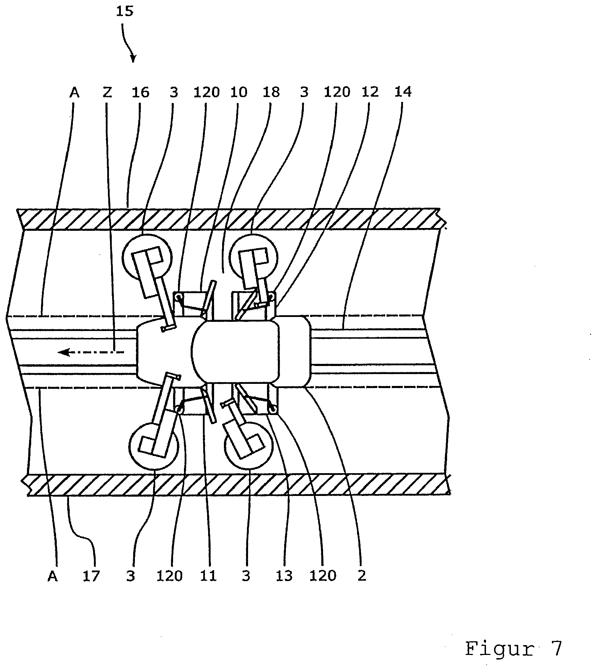

Die Figuren 7-10 zeigen Draufsichten sowie Schnittansichten einer erfindungsgemäßen Ausführungsform einer Vorrichtung zur Behandlung von Gegenständen, die in dem vorliegenden Beispiel als Lackierkabine 15 mit einer einzigen Lackierstation 18 ausgebildet ist. An der Lackierstation 18 sind vier Mehrachsroboter 3 vorgesehen. Die Mehrachsroboter 3 können beispielsweise als Roboter mit insgesamt sieben Bewegungsachsen ausgebildet sein, so dass sich der einzelne Mehrachsroboter 3 relativ zu dem feststehenden und zu behandelnden Gegenstand selbsttätig bewegen kann. Mittels einer Fördereinrichtung 14 werden die zu behandelnden Gegenstände, im vorliegenden Beispiel Fahrzeugkarosserien 2, entlang einer Förderrichtung Z im Stop-and-Go-Verfahren zu der Lackierstation 18 und nach dem Lackiervorgang weiter aus der Lackierkabine 15 gefördert. Die Lackierstation 18 ist eine kombinierte Innen-/Außenlackierstation. Eine Um-Positionierung der Handhabungsroboter von Innen- auf Außenlackierung oder umgekehrt wird durch Positioniereinrichtungen so schnell vorgenommen, dass die Gesamttaktzeit der Lackierkabine 15 erhöht werden kann .

Weiterhin fallen durch dieses Zusammenlegen der Innenlackierzelle mit der Außenlackierzelle bis zu vier Mehrachsroboter mit zugehörigen Beschichtungseinrichtungen weg. Dadurch kann insgesamt die Lackierstraße kürzer gebaut werden. Damit fallen aber vor allem ein Teil der Versorgungsleitungen weg, einschließlich der Luft Zuführung in die Lackierkabine und der Oversprayabreinigung unterhalb der Lackierkabine.

In der Lackierstation 18 sind an der Fördereinrichtung 14 und unterhalb eines Bereich A, der von einer Fahrzeugkarosserie 2 überdeckt wird, vier Positioniereinrichtungen 10-13 vorgesehen, wie sie bereits detailliert unter Bezugnahme auf Figur 3 erläutert worden sind.

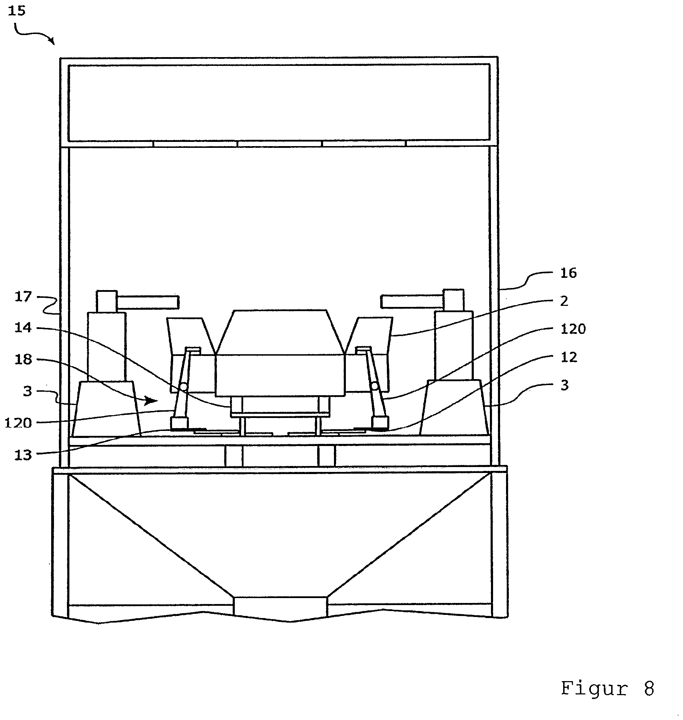

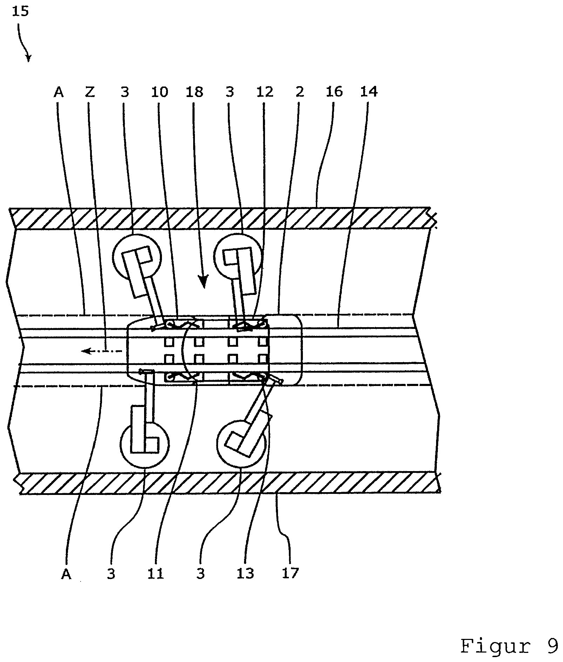

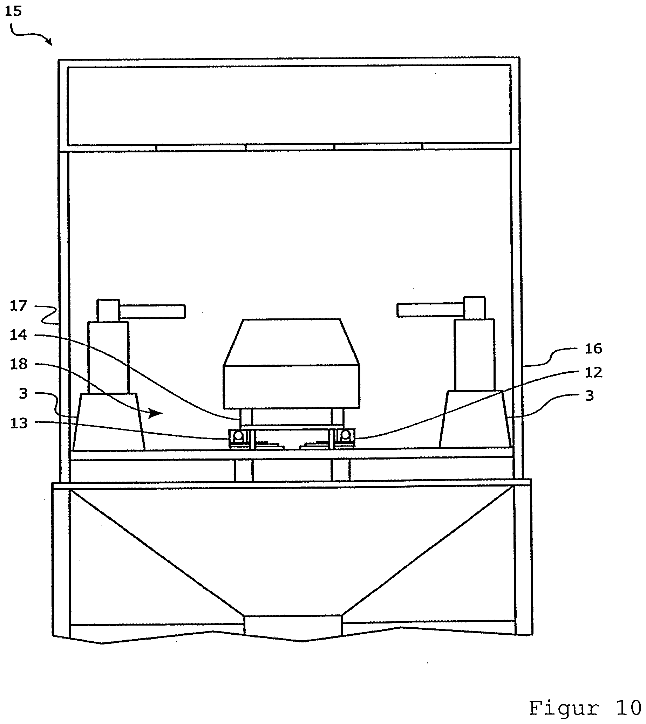

In den Figuren 7 und 8 befinden sich die Positioniereinrichtungen 10-13 in der Aktivposition. Die Handhabungsroboter 120 haben ihre Aktivstellung eingenommen. Konkret halten die in dieser Ausführungsform als Türöffnungsroboter ausgebildeten Handhabungsroboter 120 die jeweilige Tür der Fahrzeugkarosserie 2 in der Offenstellung. Es können auch weitere ähnlich ausgestaltete Handhabungsroboter für eine Haubenöffnung oder Heckklappenöffnung vorgesehen sein. Je nach Ausgestaltung des Tür-/Hauben-/Heckklappen-Öffnungsmechanismus kann auch vorgesehen sein, dass der Handhabungsroboter 120 nicht dafür benötigt wird, die Tür/Haube/Heckklappe offen zu halten. In diesem Fall kann sich die Positioniereinrichtung 10-13 nach dem Öffnungsvorgang in eine Ruheposition begeben, um so den Mehrachsrobotern 3 eine größtmögliche Bewegungsfreiheit zu geben. In dem vorliegenden Ausführungsbeispiel wird, wie in den Figuren 7 und 8 gezeigt, die Fahrzeugkarosserie 2 zunächst innen lackiert, um dann außen lackiert zu werden. Dies ist in den Figuren 9 und 10 dargestellt.

Die Figuren 9 und 10 zeigen eine Draufsicht sowie eine Schnittansicht einer Situation, in der sich die Positioniereinrichtungen 10-13 in ihrer jeweiligen Ruheposition befinden. Diese wird eingenommen, wenn die den Positioniereinrichtungen 10-13 zugeordneten Handhabungsroboter 120 momentan nicht benötigt werden und/oder der ansonsten von den Positioniereinrichtungen 10-13 belegte Platz beispielsweise für eine Bewegung der Mehrachsroboter 3 benötigt wird. In der hier dargestellten Ausführungsform ist dies der Fall, wenn von einer Innenlackierung auf eine Außenlackierung übergegangen wird. Für die Außenlackierung sollen die Karosserieöffnungen wie Türen oder Haube/Heckklappe, soweit möglich, verschlossen sein. Dieser Schließvorgang wird durch die Handhabungsroboter 120 durchgeführt. Anschließend begeben sich die Handhabungsroboter 120 in ihre Ruhestellung und die Positioniereinrichtungen 10, 11 verfahren in die Ruheposition und geben dadurch den Mehrachsrobotern 3 einen größtmöglichen Raum.

## Patentansprüche

1. Vorrichtung (15) zur Behandlung von Gegenständen (2), mit
a) einer Fördereinrichtung (14) zum Bewegen der zu behandelnden Gegenstände (2),
b) einem Handhabungsroboter (120),
c) einer Positioniereinrichtung (10-13) für den Handhabungsroboter (120), wobei die Positioniereinrichtung (10-13) dazu eingerichtet ist, in einem ersten Zustand der Positioniereinrichtung den Handhabungsroboter (120) in einer Ruheposition und in einem zweiten Zustand den Handhabungsroboter (120) in einer Aktivposition zu halten, wobei der Handhabungsroboter (120) in der Ruheposition unterhalb eines zu behandelnden Gegenstands (2) angeordnet ist, und
d) einem Mehrachsroboter (3) mit einem bestimmten Bewegungsbereich,
**dadurch gekennzeichnet,**
e) dass sich der Handhabungsroboter (120) in der Ruheposition außerhalb des Bewegungsbereichs des Mehrachsroboters (3) befindet.

2. Vorrichtung nach Anspruch 1, wobei der Handhabungsroboter (120) in der Aktivposition zumindest teilweise oberhalb der tiefsten Stelle des zu behandelnden Gegenstands (2) ist.

3. Vorrichtung nach einem der Ansprüche 1 oder 2, wobei die Positioniereinrichtung (10-13) eine mechanische Verbindungsmöglichkeit für einen Handhabungsroboter (120) aufweist und/oder der Handhabungsroboter (120) ein Mehrachsroboter ist.

4. Vorrichtung nach Anspruch 3, wobei sich die Position der mechanischen Verbindungsmöglichkeit in der Ruheposition von der Position der mechanischen Verbindungsmöglichkeit in der Aktivposition unterscheidet.

5. Vorrichtung nach einem der vorhergehenden Ansprüche, wobei die Positioniereinrichtung (10-13) so eingerichtet ist, dass der Übergang von der Ruheposition in die Aktivposition mittels einer Rotationsbewegung oder/und einer Translationsbewegung erfolgt.

6. Vorrichtung nach einem der vorhergehenden Ansprüche, wobei der Handhabungsroboter (120) in der Ruheposition durch die Positioniereinrichtung (10-13) geschützt ist.

7. Vorrichtung nach Anspruch 4, wobei eine Verbindungsgerade zwischen der mechanischen Verbindungsmöglichkeit in der Ruheposition und der mechanischen Verbindungsmöglichkeit in der Aktivposition einen Winkel zu der Bewegungsrichtung des zu behandelnden Gegenstands in einem Bereich von 30° bis 150°, bevorzugt 45° bis 135°, besonders bevorzugt 60° bis 120° und insbesondere 90° aufweist.

8. Vorrichtung nach einem der vorhergehenden Ansprüche, wobei die Positioniereinrichtung (10-13) an und/oder innerhalb eines Raumes der Fördereinrichtung (14) angeordnet ist.

9. Vorrichtung nach einem der vorhergehenden Ansprüche, wobei die Positioniereinrichtung dazu eingerichtet ist, unterhalb der Fördereinrichtung mittels einer eigenen zusätzlichen horizontalen Achse mit dem zu behandelnden Gegenstand mitgefördert zu werden.

10. Vorrichtung nach einem der vorhergehenden Ansprüche, mit einer Steuereinrichtung, die derart eingerichtet ist, dass, während sich der Handhabungsroboter (120) in der Aktivposition befindet, durch den eine Beschichtungseinrichtung tragenden Mehrachsroboter (3) eine Fahrzeugkarosserie (2) bei geöffneten Türen, Heck- und/oder Frontklappe von innen lackiert wird und/oder bei geschlossenen Türen, Heck- und/oder Frontklappe von außen lackiert wird.

## Claims

1. Apparatus (15) for the treatment of objects (2), with
a) a conveyor device (14) for moving the objects (2) to be treated,
b) a handling robot (120),
c) a positioning device (10-13) for the handling robot (120), the positioning device (10-13) being arranged to hold the handling robot (120) in a rest position in a first state of the positioning device and to hold the handling robot (120) in an active position in a second state, the handling robot (120) being arranged in the rest position below an object (2) to be treated, and
d) a multi-axis robot (3) with a certain range of movement,
**characterized in**
e) that the handling robot (120) in the rest position is located outside the movement range of the multi-axis robot (3).

2. Apparatus according to claim 1, wherein the handling robot (120) in the active position is at least partially above the lowest point of the object (2) to be treated.

3. Apparatus according to any one of claims 1 or 2, wherein the positioning device (10-13) comprises a mechanical connection facility for a handling robot (120) and/or the handling robot (120) is a multi-axis robot.

4. Apparatus according to claim 3, wherein the position of the mechanical connection facility in the rest position is different from the position of the mechanical connection facility in the active position.

5. Apparatus according to one of the preceding claims, wherein the positioning device (10-13) is set up in such a way that the transition from the rest position to the active position takes place by means of a rotational movement or/and a translational movement.

6. Apparatus according to one of the preceding claims, wherein the handling robot (120) is protected in the rest position by the positioning device (10-13).

7. Apparatus according to claim 4, wherein a connecting straight line between the mechanical connection facility in the rest position and the mechanical connection facility in the active position has an angle to the direction of movement of the object to be handled in a range from 30° to 150°, preferably 45° to 135°, particularly preferably 60° to 120° and in particular 90°.

8. Apparatus according to one of the preceding claims, wherein the positioning device (10-13) is arranged on and/or within a space of the conveyor device (14).

9. Apparatus according to one of the preceding claims, wherein the positioning device is arranged to be conveyed below the conveyor device by means of its own additional horizontal axis together with the object to be treated.

10. Apparatus according to one of the preceding claims, having a control device which is set up in such a way that, while the handling robot (120) is in the active position, a vehicle body (2) is painted from the inside by the multi-axis robot (3) carrying a coating device when the doors, tailgate and/or front flap are open and/or is painted from the outside when the doors, tailgate and/or front flap are closed.

## Revendications

1. Dispositif (15) pour le traitement d'objets (2), avec
a) un système de convoyage (14) pour le déplacement des objets (2) à traiter,
b) un robot de manipulation (120),
c) un système de positionnement (10-13) pour le robot de manipulation (120), le système de positionnement (10-13) étant agencé pour, dans un premier état du système de positionnement, retenir le robot de manipulation (120) dans une position de repos et pour, dans un deuxième état, retenir le robot de manipulation (120) dans une position active, le robot de manipulation (120) étant, dans la position de repos, disposé au-dessous d'un objet (2) à traiter, et
d) un robot multiaxe (3) avec une plage de mouvement définie,
**caractérisé en ce que,**
e) dans la position de repos, le robot de manipulation (120) se trouve en dehors de la plage de mouvement du robot multiaxe (3).

2. Dispositif
selon la revendication 1, le robot de manipulation (120) étant, dans la position active, au moins partiellement au-dessus de l'emplacement le plus bas de l'objet (2) à traiter.

3. Dispositif
selon l'une des revendications 1 ou 2, le système de positionnement (10-13) comportant une possibilité de raccordement mécanique pour un robot de manipulation (120), et/ou le robot de manipulation (120) étant un robot multiaxe.

4. Dispositif
selon la revendication 3, la position de la possibilité de raccordement mécanique dans la position de repos se distinguant de la position de la possibilité de raccordement mécanique dans la position active.

5. Dispositif
selon l'une des revendications précédentes, le système de positionnement (10-13) étant agencé de telle sorte que la transition à partir de la position de repos vers la position active s'effectue au moyen d'un mouvement de rotation et/ou d'un mouvement de translation.

6. Dispositif
selon l'une des revendications précédentes, le robot de manipulation (120) étant, dans la position de repos, protégé par le système de positionnement (10-13).

7. Dispositif selon la revendication 4, une droite de raccordement entre la possibilité de raccordement mécanique dans la position de repos et la possibilité de raccordement mécanique dans la position active présentant par rapport à la direction de mouvement de l'objet à traiter un angle dans une plage de 30° à 150°, de préférence de 45° à 135°, de façon particulièrement préférée de 60° à 120° et en particulier de 90°.

8. Dispositif selon l'une des revendications précédentes, le système de positionnement (10-13) étant disposé sur et/ou à l'intérieur d'un espace du système de convoyage (14).

9. Dispositif selon l'une des revendications précédentes, le système de positionnement étant agencé pour être déplacé solidairement avec l'objet à traiter au-dessous du dispositif de convoyage au moyen d'un propre axe horizontal supplémentaire.

10. Dispositif selon l'une des revendications précédentes, avec un système de commande qui est agencé de telle sorte que, pendant que le robot de manipulation (120) se trouve dans la position active, une carrosserie de véhicule (2) est peinte à partir de l'intérieur par le robot multiaxe (3) portant un système de revêtement alors que les portes, le hayon et/ou le volet avant sont ouverts, et/ou est peinte à partir de l'extérieur alors que les portes, le hayon et/ou le volet avant sont fermés.
